# EUROPEAN PATENT APPLICATION

(11) **EP 4 827 186 A1**
(43) Date of publication of application: **21.10.2026**
(21) Application number: 24902764.0
(22) Date of filing: 09.12.2024
(51) Int. Cl.: H04W 52/14

(54) **POWER RAMPING METHOD AND APPARATUS, TERMINAL, AND NETWORK SIDE DEVICE**

(30) Priority: 13.12.2023 CN 202311712938
(71) Applicant: Vivo Mobile Communication Co., Ltd., Dongguan, Guangdong 523863 (CN)
(72) Inventor: CAO, Jiayi, Dongguan, Guangdong 523863 (CN); DU, Hao, Dongguan, Guangdong 523863 (CN)
(74) Representative: Lavoix
(86) International application number: PCT/CN2024/137826
(87) International publication number: WO 2025/124343

(57) **Abstract**

This application discloses a power boosting method and apparatus, a terminal, and a network-side device, pertaining to the field of communication technology. The power boosting method according to an embodiment of this application includes: boosting, by a terminal, at least one of an upper limit value of a target object or a lower limit value of the target object in a case that the terminal receives first information from a network-side device, where the target object includes at least one of a terminal configured maximum output power or a measured peak value of a terminal equivalent isotropically radiated power; where the first information is used to indicate the terminal to perform a boosting operation on the target object.

## Description

### CROSS-REFERENCE TO RELATED APPLICATIONS

This application claims priority to the Chinese Patent Application No. 202311712938.1, filed with the China National Intellectual Property Administration on December 13, 2023 and entitled "POWER BOOSTING METHOD AND APPARATUS, TERMINAL, AND NETWORK-SIDE DEVICE", which is incorporated herein by reference in its entirety.

### TECHNICAL FIELD

This application pertains to the field of communication technology, and specifically relates to a power boosting method and apparatus, a terminal, and a network-side device.

### BACKGROUND

In a communication system, for a terminal, uplink coverage is one of the important requirements. Currently, one of the reasons limiting transmit power of a terminal is that the terminal needs to meet a series of terminal radio frequency indicators customized by specifications, and thus power reduction needs to be performed. Currently, since a value range of a configured maximum output power of the terminal and a value range of a measured peak value of equivalent isotropically radiated power of the terminal are both fixed, uplink performance of the terminal is limited.

### SUMMARY

Embodiments of this application provide a power boosting method and apparatus, a terminal, and a network-side device, to solve the problem of limited uplink performance of the terminal.

According to a first aspect, a power boosting method is provided, including:
boosting, by a terminal, at least one of an upper limit value of a target object or a lower limit value of the target object in a case that the terminal receives first information from a network-side device, where the target object includes at least one of a terminal configured maximum output power or a measured peak value of a terminal equivalent isotropically radiated power; where
the first information is used to indicate the terminal to perform a boosting operation on the target object.

According to a second aspect, a power boosting method is provided, including:
sending, by a network-side device, first information to a terminal, where the first information is used to indicate a boosting operation on a target object, and the first information is used to trigger the terminal to boost at least one of an upper limit value of the target object or a lower limit value of the target object, and the target object includes at least one of a terminal configured maximum output power or a measured peak value of a terminal equivalent isotropically radiated power.

According to a third aspect, a power boosting apparatus is provided, including:
a processing module configured to boost at least one of an upper limit value of a target object or a lower limit value of the target object in a case that a terminal receives first information from a network-side device, where the target object includes at least one of a terminal configured maximum output power or a measured peak value of a terminal equivalent isotropically radiated power; where
the first information is used to indicate the terminal to perform a boosting operation on the target object.

According to a fourth aspect, a power boosting apparatus is provided, including:
a first sending module configured to send first information to a terminal, where the first information is used to indicate a boosting operation on a target object, the first information is used to trigger the terminal to boost at least one of an upper limit value of the target object or a lower limit value of the target object, and the target object includes at least one of a terminal configured maximum output power or a measured peak value of a terminal equivalent isotropically radiated power.

According to a fifth aspect, a terminal is provided. The terminal includes a processor and a memory, where the memory stores a program or instructions capable of running on the processor, and the program or instructions, when executed by the processor, implement the steps of the method according to the first aspect.

According to a sixth aspect, a terminal is provided, including a processor and a communication interface, where the processor is configured to boost at least one of an upper limit value of a target object or a lower limit value of the target object in a case that the terminal receives first information from a network-side device, where the target object includes at least one of a terminal configured maximum output power or a measured peak value of a terminal equivalent isotropically radiated power; where
the first information is used to indicate the terminal to perform a boosting operation on the target object.

According to a seventh aspect, a network-side device is provided. The network-side device includes a processor and a memory, where the memory stores a program or instructions capable of running on the processor, and the program or instructions, when executed by the processor, implement the steps of the method according to the second aspect.

According to an eighth aspect, a network-side device is provided, including a processor and a communication interface, where the communication interface is configured to send first information to a terminal, where the first information is used to indicate a boosting operation on a target object, the first information is used to trigger the terminal to boost at least one of an upper limit value of the target object or a lower limit value of the target object, and the target object includes at least one of a terminal configured maximum output power or a measured peak value of a terminal equivalent isotropically radiated power.

According to a ninth aspect, a readable storage medium is provided, where a program or instructions are stored on the readable storage medium, and the program or instructions, when executed by a processor, implement the steps of the method according to the first aspect, or implement the steps of the method according to the second aspect.

According to a tenth aspect, a wireless communication system is provided, including: a terminal and a network-side device, where the terminal may be configured to perform the steps of the method according to the first aspect, and the network-side device may be configured to perform the steps of the method according to the second aspect.

According to an eleventh aspect, a chip is provided. The chip includes a processor and a communication interface, where the communication interface is coupled to the processor, and the processor is configured to run a program or instructions to implement the method according to the first aspect, or implement the method according to the second aspect.

According to a twelfth aspect, a computer program/program product is provided, where the computer program/program product is stored in a storage medium, and the computer program/program product is executed by at least one processor to implement the method according to the first aspect, or implement the method according to the second aspect.

In the embodiments of this application, in a case that a terminal receives first information from a network-side device, the terminal boosts at least one of an upper limit value of a target object or a lower limit value of the target object, where the target object includes at least one of a terminal configured maximum output power or a measured peak value of a terminal equivalent isotropically radiated power; where the first information is used to indicate the terminal to perform a boosting operation on the target object. In this way, in a case that the terminal device receives the first information, the terminal boosts at least one of the upper limit value of the target object or the lower limit value of the target object, thereby implementing power boosting of the terminal. Therefore, the embodiments of this application improve uplink performance of the terminal.

### BRIEF DESCRIPTION OF DRAWINGS

FIG. 1 is a block diagram of a wireless communication system to which embodiments of this application are applicable;
FIG. 2 is a schematic flowchart of a power boosting method according to an embodiment of this application;
FIG. 3 is a schematic flowchart of another power boosting method according to an embodiment of this application;
FIG. 4 is a schematic structural diagram of a power boosting apparatus according to an embodiment of this application;
FIG. 5 is a schematic structural diagram of another power boosting apparatus according to an embodiment of this application;
FIG. 6 is a schematic structural diagram of a communication device according to an embodiment of this application;
FIG. 7 is a schematic structural diagram of a terminal according to an embodiment of this application; and
FIG. 8 is a schematic structural diagram of a network-side device according to an embodiment of this application.

### DESCRIPTION OF EMBODIMENTS

The terms "first", "second", and the like in this application are used to distinguish between similar objects rather than to describe a specific order or sequence. It should be understood that terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited, for example, there may be one or more first objects. In addition, "or" in this application represents at least one of connected objects. For example, "A or B" covers three schemes, that is, scheme 1: including A and not including B; scheme 2: including B and not including A; and scheme 3: including both A and B. The character "/" generally indicates that the associated objects have an "or" relationship.

The term "indication" in this application may be a direct indication (or explicit indication) or an indirect indication (or implicit indication). A direct indication may be understood as a sender explicitly informing a receiver of content such as specific information, an operation to be performed, or a request result in a sent indication; an indirect indication may be understood as a receiver determining corresponding information based on an indication sent by a sender, or making a judgment and determining an operation to be performed, a request result, or the like based on a judgment result.

It should be noted that technologies described in the embodiments of this application are not limited to a long term evolution (Long Term Evolution, LTE)/LTE-advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for illustration purpose, and NR terms are used in most of the following descriptions, although these technologies may also be applied to other systems than an NR system, for example, the 6^{th} generation (6^{th} Generation, 6G) communication system.

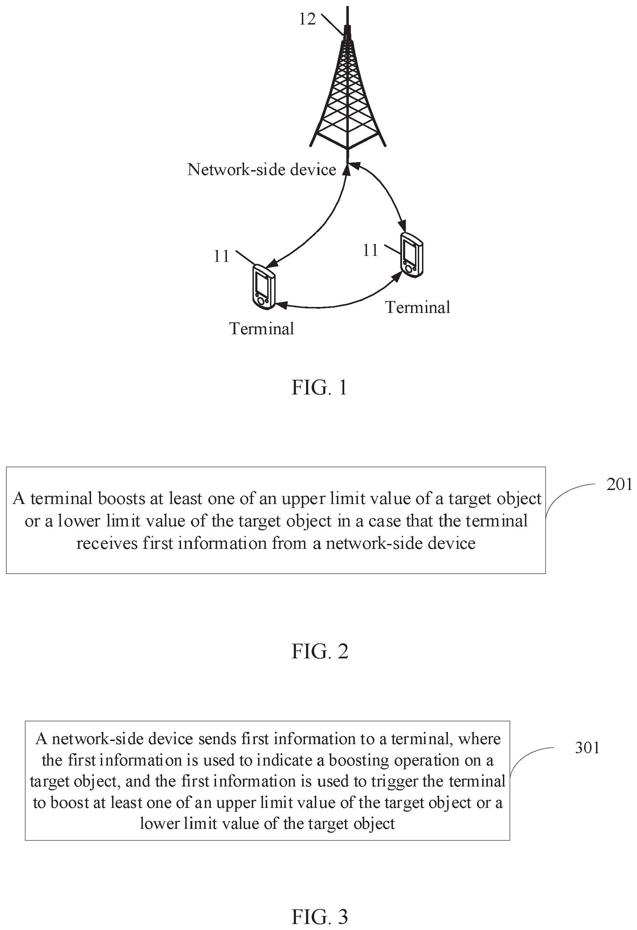

FIG. 1 is a block diagram of a wireless communication system to which embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) or virtual reality (Virtual Reality, VR) device, a robot, a wearable device (Wearable Device), a flight vehicle (flight vehicle), vehicle user equipment (Vehicle User Equipment, VUE), ship-borne equipment, pedestrian user equipment (Pedestrian User Equipment, PUE), smart household (home devices with wireless communication functions, such as refrigerators, televisions, washing machines, or furniture), a game console, a personal computer (Personal Computer, PC), a teller machine, or a self-service machine. The wearable device includes a smartwatch, a smart band, smart earphones, smart glasses, smart jewelry (a smart bangle, a smart bracelet, a smart ring, a smart necklace, a smart leglet, a smart anklet, and the like), a smart wristband, smart clothing, or the like. The vehicle user equipment may also be referred to as an in-vehicle terminal, an in-vehicle controller, an in-vehicle module, an in-vehicle component, an in-vehicle chip, an in-vehicle unit, and the like. It should be noted that the terminal 11 is not limited to a specific type in the embodiments of this application. The network-side device 12 may include an access network device or a core network device. The access network device may also be referred to as a radio access network (Radio Access Network, RAN) device, a wireless access network function, or a wireless access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (Node B, NB), an evolved NodeB (Evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission reception point (Transmission Reception Point, TRP), or other suitable terms in the field. Provided that the same technical effect is achieved, the base station is not limited to specific technical terms. It should be noted that in the embodiments of this application, only the base station in the NR system is used as an example, but the specific type of the base station is not limited.

For ease of understanding, some contents involved in the embodiments of this application are described below.
I. Maximum power reduction (Maximum Power Reduction, MPR).

Maximum power reduction refers to a power management maximum power reduction value allowed by a terminal to meet limitations of related radio frequency indicators, as shown in Table 1 below.

**Table 1**

| Modulation | | Maximum power reduction value (dB) | | |
|---|---|---|---|---|
| | | Edge RB allocation | Outer RB allocation | Inner RB allocation |
| DFT-s-OFDM | Pi/2 BPSK | ≤3.5¹ | ≤1.2¹ | ≤0.2¹ |
| | | ≤3.5^{2.3} | ≤0.5² | 0² |
| | Pi/2 BPSK w Pi/2 BPSK DMRS | ≤3.5^{2.3} | 0² | 0² |
| | QPSK | ≤1 | | 0 |
| | 16 QAM | ≤2 | | ≤1 |
| | 64 QAM | ≤2.5 | | |
| | 256 QAM | ≤4.5 | | |
| CP-OFDM | QPSK | ≤3 | | ≤1.5 |
| | 16 QAM | ≤3 | | ≤2 |
| | 64 QAM | ≤3.5 | | |
| | 256 QAM | ≤6.5 | | |

Power reduction is related to different modulation orders (QPSK, 16QAM, and the like) and waveforms (CP-OFDM, DFT-S-OFDM). The edge (Edge), outer (Outer), and inner (Inner) in the table represent different resource block (resource block, RB) placement areas. Details are as follows.

The following parameters are defined to specify the effective ranges of the three different RB region divisions of Outer, Inner and Edge in the MPR indicators: ${RB}_{Start , Low} = max \left(1, floor\left({L}_{CRB}/2\right)\right) ; and$ ${RB}_{Start , High} = {N}_{RB} - {RB}_{Start , Low} - {L}_{CRB} .$

L_{CRB} represents the number of contiguous RB allocations in units of RBs; N_{RB} represents the maximum number of RBs for a given channel bandwidth and subcarrier spacing; max() represents a maximum value among all parameters, and floor(x) is the largest integer less than or equal to x.

If an RB allocation satisfies the following conditions, the allocation belongs to an inner RB allocation (Inner RB allocations) region: ${RB}_{Start , Low} \leq {RB}_{Start} \leq {RB}_{Start , High} , and {L}_{CRB} \leq ceil \left({N}_{RB}/2\right) ;$ where
RB_{Start} is the starting position or lowest RB index of the RB allocation; and ceil(x) is the smallest integer greater than or equal to x.

If an RB allocation satisfies the following conditions, the allocation belongs to an edge RB allocation (Edge RB allocations) region:
the RB(s) is (are) allocated at the lowermost or uppermost edge of the channel L_{CRB} ≤ 2 RBs.

Optionally, the foregoing rules do not apply to a PC1 UE supporting other bands than n14.

Other types of RB allocations belong to an outer RB allocation (Outer RB allocations) region.

II. Terminal radio frequency indicators affecting MPR.

Adjacent channel leakage ratio (adjacent channel leakage ratio, ACLR);

Spectrum emission mask (spectrum emission mask, SEM);

Error vector magnitude (error vector magnitude, EVM);

In-band emission (in-band emission, IBE); and

Occupied bandwidth (Occupied bandwidth, OBW).

III. Configured transmit power requirements.

The lower and upper limits of terminal transmit power are defined in the specification. The following takes frequency range 1 (Frequency Range 1, FR1) as an example.

A terminal is allowed to set its terminal configured maximum output power P_{CMAX,f,c} for carrier f of serving cell c in each slot. The terminal configured maximum output power P_{CMAX,f,c} needs to satisfy the following formula: ${P}_{CMAX_L , f , c} \leq {P}_{CMAX , f , c} < = {P}_{CMAX_H , f , c} ;$ where
P_{CMAX_L,f,c} represents a lower limit value of the terminal configured maximum output power; and P_{CMAX_H,f,c} represents an upper limit value of the terminal configured maximum output power. 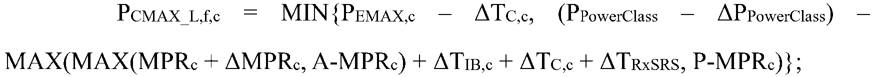 PCMAX_L,f,c = MIN{PEMAX,c - ΔTC,c, (PPowerClass - ΔPPowerClass) - MAX(MAX(MPRc + ΔMPRc, A-MPRc) + ΔTIB,c + ΔTC,c + ΔTRxSRS, P-MPRc)}; and and ${P}_{CMAX_H , f , c} = MIN \left\{{P}_{EMAX , c}, {P}_{PowerClass}-{ΔP}_{PowerClass}\right\} ;$ where P_{EMAX,c} is a terminal configured maximum output power allowed by configuration of the network-side device; ΔT_{C,c} is an allowed operating band edge transmission power relaxation; P_{PowerClass} is a terminal maximum output power specified by a preset power class; ΔP_{PowerClass} is an adjustment to maximum output power for a given power class; MPR_{c} is a maximum power reduction value (that is, an allowed maximum power reduction value when the terminal radio frequency indicator is not relaxed), where the second maximum power reduction value represents an allowed power reduction value for meeting limitation of the terminal radio frequency indicator; ΔMPR_{c} is an allowed maximum power reduction relaxation for serving cell c; A-MPR_{c} is an additional maximum power reduction configured to meet a radiated power regulatory requirement; ΔT_{IB,c} is an allowed maximum configured output power relaxation for supporting operations such as inter-band carrier aggregation (Carrier Aggregation, CA); ΔT_{RxSRS} is a relaxation value allowed for transmission on a non-primary transmit (Tx) antenna via a sounding reference signal (Sounding Reference Signal, SRS) antenna switch; and P-MPR_{c} is a power management maximum power reduction value used to meet an electromagnetic radiation requirement.

IV. Relaxation of terminal radio frequency indicators.

MPR evaluation is a scenario based on the worst case. In some cases, a terminal radio frequency indicator can be relaxed, thereby reducing the required MPR. For example, when a terminal bandwidth is configured in the center of the entire system bandwidth, ACLR and SEM can be relaxed; and when a base station (Base Station, BS) adopts advanced technologies such as digital pre-distortion (Digital Pre-Distortion, DPD), EVM can be relaxed.

The following describes a power boosting method according to an embodiment of this application in detail with reference to the accompanying drawings through some embodiments and application scenarios thereof.

Referring to FIG. 2, an embodiment of this application provides a power boosting method. As shown in FIG. 2, the power boosting method includes the following step.

Step 201. A terminal boosts at least one of an upper limit value of a target object or a lower limit value of the target object in a case that the terminal receives first information from a network-side device, where the target object includes at least one of a terminal configured maximum output power or a measured peak value of a terminal equivalent isotropically radiated power; where
the first information is used to indicate the terminal to perform a boosting operation on the target object.

In the embodiments of this application, the first information may indicate, by carrying indication information, relaxation of a terminal radio frequency indicator or permission to relax a terminal radio frequency indicator. For example, the indication information may specifically indicate, by indicating relaxation of a terminal radio frequency indicator, the terminal to perform a boosting operation on the target object. The indication information may specifically indicate, by indicating permission to relax a target radio frequency indicator, the terminal to perform a boosting operation on the target object; or may indicate, by indicating a maximum allowed power boost value used when the terminal radio frequency indicator is relaxed, the terminal to perform a boosting operation on the target object. In other words, in some embodiments, the first information includes at least one of the following:
target indication information, where the target indication information is used to indicate relaxation of a terminal radio frequency indicator or a target radio frequency indicator to be relaxed in a terminal radio frequency indicator; or
a first maximum allowed power boost value, where the first maximum allowed power boost value is used to represent a maximum allowed power boost value when the terminal radio frequency indicator is relaxed.

It should be understood that the boosting operation on the target object includes boosting at least one of the upper limit value of the target object or the lower limit value of the target object. The terminal boosting the upper limit value of the target object and the lower limit value of the target object may be understood as: boosting the upper limit value of the target object and the lower limit value of the target object simultaneously.

Optionally, in some embodiments, one or more target radio frequency indicators may be indicated in the first information. The terminal may determine a maximum allowed power boost value or a maximum power reduction value based on the indicated target radio frequency indicator or indicators, and then boost at least one of a lower limit value of the target object and an upper limit value of the target object based on the determined maximum allowed power boost value or maximum power reduction value. It should be understood that during indication of multiple target radio frequency indicators, if the maximum allowed power boost values associated with the multiple target radio frequency indicators are different, the maximum value among the multiple maximum allowed power boost values may be selected to perform the boosting operation on the target object, or the minimum value among the multiple maximum allowed power boost values may be selected to perform the boosting operation on the target object, or the arithmetic mean value among the multiple maximum allowed power boost values may be used to perform the boosting operation on the target object. Similarly, if the maximum power reduction values associated with the multiple target radio frequency indicators are different, the maximum value among the multiple maximum power reduction values may be selected to perform the boosting operation on the target object, the minimum value among the multiple maximum power reduction values may be selected to perform the boosting operation on the target object, or the arithmetic mean value among the multiple maximum power reduction values may be used to perform the boosting operation on the target object.

It should be noted that in the embodiments of this application, through the judgment of the network-side device, in a case that the network-side device sends the first information, the terminal may boost at least one of an upper limit value of the target object or a lower limit value of the target object. At this time, the terminal is allowed to transmit an uplink signal at a higher power, thereby obtaining better uplink coverage performance.

In the embodiments of this application, in a case that a terminal receives first information from a network-side device, the terminal boosts at least one of an upper limit value of a target object or a lower limit value of the target object, where the target object includes at least one of a terminal configured maximum output power or a measured peak value of a terminal equivalent isotropically radiated power; where the first information is used to indicate the terminal to perform a boosting operation on the target object. In this way, in a case that the terminal device receives the first information, the terminal boosts at least one of the upper limit value of the target object or the lower limit value of the target object, thereby implementing power boosting of the terminal. Therefore, the embodiments of this application improve uplink performance of the terminal.

Optionally, in some embodiments, the boosting, by a terminal, at least one of an upper limit value of a target object or a lower limit value of the target object in a case that the terminal receives first information from a network-side device includes:
in a case that the terminal receives the first information from the network-side device, determining a target maximum allowed power boost value; and
boosting, by the terminal, at least one of the upper limit value of the target object or the lower limit value of the target object based on the target maximum allowed power boost value; where
in a case that the first information includes the first maximum allowed power boost value, the target maximum allowed power boost value is the first maximum allowed power boost value; and in a case that the first information includes the target indication information, the target maximum allowed power boost value includes any one of the following:
   a protocol-agreed maximum allowed power boost value;
   a second maximum allowed power boost value associated with the target radio frequency indicator among at least one second maximum allowed power boost value; and
   a maximum allowed power boost value determined based on at least one of a waveform, a modulation scheme, or a resource block region.

In the embodiments of this application, the at least one second maximum allowed power boost value may be a maximum allowed power boost value agreed upon by a protocol or configured by the network-side device. Each of the second maximum allowed power boost value is associated with at least one terminal radio frequency indicator. In a case that at least two second maximum power boost values are protocol-agreed or configured by the network-side device, different second maximum power boost values correspond to different terminal radio frequency indicators.

Optionally, the second information may be understood as or replaced with terminal power boost information (UEPowerBoost). The performing, by the terminal, the boosting operation on the target object may be understood as: performing, by the terminal, an operation of boosting at least one of the upper limit value of the target object or the lower limit value of the target object.

Optionally, in a case that the first information includes the first maximum allowed power boost value, at least one of the upper limit value of the target object or the lower limit value of the target object may be boosted based on the first maximum allowed power boost value; and in a case that the first information includes the target indication information, a target maximum boosting power used for performing the boosting operation on the target object may be determined based on a protocol-agreed maximum allowed power boost value, at least one second maximum allowed power boost value agreed upon by a protocol or configured by the network-side device, or based on a waveform, a modulation scheme, and a resource block region.

Optionally, in a case that the first information includes both the target indication information and the first maximum allowed power boost value, the target maximum boosting power may be determined based on the first maximum allowed power boost value, or the target maximum boosting power may be determined based on a protocol-agreed maximum allowed power boost value, at least one second maximum allowed power boost value agreed upon by a protocol or configured by the network-side device, or based on a waveform, a modulation scheme, and a resource block region, which is not further limited herein.

Optionally, since the network-side device may send the first maximum allowed power boost value to the terminal, and the terminal boosts at least one of the upper limit value of the target object or the lower limit value of the target object based on the first maximum allowed power boost value, the network-side device may set the first maximum allowed power boost value based on the relaxed terminal indicator, thereby improving flexibility of power boosting.

Optionally, the protocol-agreed maximum allowed power boost value may be understood as: a protocol agrees upon a fixed maximum allowed power boost value. When the network-side device indicates relaxation of a terminal radio frequency indicator, at least one of the upper limit value of the target object or the lower limit value of the target object may be boosted based on the fixed maximum allowed power boost value. This requires only small changes to the protocol and is simple to implement.

Optionally, one or more second maximum allowed power boost values may be associated with the target radio frequency indicator. For example, when the target radio frequency indicator is associated with one second maximum allowed power boost value, at least one of the upper limit value of the target object or the lower limit value of the target object may be directly boosted based on the second maximum allowed power boost value associated with the target radio frequency indicator. When the target radio frequency indicator is associated with at least two second maximum allowed power boost values, a finally used second maximum allowed power boost value, that is, the target maximum allowed power boost value, may be further determined based on at least one of a waveform, a modulation scheme, or a resource block region. Since the target maximum allowed power boost value is determined based on the target radio frequency indicator, different maximum allowed power boost values can be used based on the allowed relaxed terminal radio frequency indicators, thereby improving the flexibility of power boosting.

Optionally, the maximum allowed power boost value determined based on at least one of a waveform, a modulation scheme, or a resource block region may be understood as pre-configuring or protocol-agreeing a correspondence between a maximum allowed power boost value and at least one of a waveform, a modulation scheme, or a resource block region, specifically as shown in Table 2 below.

**Table 2**

| Modulation | | Maximum power boost value (dB) | | |
|---|---|---|---|---|
| | | Edge RB allocation | Outer RB allocation | Inner RB allocation |
| DFT-s-OFDM | Pi/2 BPSK | A1 | A2 | A3 |
| | Pi/2 BPSK w Pi/2 BPSK DMRS | A4 | A5 | A6 |
| | QPSK | B1 | | B2 |
| | 16 QAM | C1 | | C2 |
| | 64 QAM | D1 | | |
| | 256 QAM | E1 | | |
| CP-OFDM | QPSK | ··· | | ··· |
| | 16 QAM | ··· | | ··· |
| | 64 QAM | ··· | | |
| | 256 QAM | ··· | | |

In the embodiments of this application, upon receiving the first information sent by the network-side device, the target maximum allowed power boost value may be determined according to Table 2, and at least one of the upper limit value of the target object or the lower limit value of the target object is boosted based on the target maximum allowed power boost value.

Optionally, in some embodiments, in a case that the second maximum allowed power boost value is configured by the network-side device, the following behavior may be included: in a case that the target maximum allowed power boost value is the second maximum allowed power boost value, before the boosting, by a terminal, at least one of an upper limit value of a target object or a lower limit value of the target object in a case that the terminal receives first information from a network-side device, the method further includes:
receiving, by the terminal, second information from the network-side device, where the second information includes the at least one second maximum allowed power boost value, and each of the second maximum allowed power boost value is associated with at least one terminal radio frequency indicator.

In the embodiments of this application, the second information may include one or more pieces of configuration information. When multiple pieces of configuration information are included (such as [UE*PowerBoostACLR*] and [UE*PowerBoostEVM*]), different configuration information corresponds to different terminal radio frequency indicators, and the second maximum allowed power boost values indicated in such configuration information may be different.

Optionally, in some embodiments, in a case that the target maximum allowed power boost value is the first maximum allowed power boost value or the second maximum allowed power boost value, effective information of the target maximum allowed power boost value is protocol-agreed or indicated by the network-side device; where
the effective information includes at least one of the following:
an activated waveform;
an activated modulation scheme; or
an activated resource block region.

In the embodiments of this application, the target maximum allowed power boost value is used to boost at least one of the upper limit value of the target object or the lower limit value of the target object, only in a case that the effective information is satisfied. That is, the boosting, by the terminal, at least one of the upper limit value of the target object or the lower limit value of the target object based on the target maximum allowed power boost value includes: boosting, by the terminal, at least one of the upper limit value of the target object or the lower limit value of the target object based on the target maximum allowed power boost value and the effective information. That means the target maximum allowed power boost value takes effect only for a specific resource block region, modulation scheme, or waveform.

For example, in a case that a preset condition is satisfied, at least one of the upper limit value of the target object or the lower limit value of the target object is boosted based on the target maximum allowed power boost value, where the preset condition includes at least one of the following:
a waveform used for transmission by the terminal is an activated waveform;
a modulation scheme used for transmission by the terminal is an activated modulation scheme; and
a resource block region used for transmission by the terminal is an activated resource block region.

Optionally, in some embodiments, the preset condition matches the effective information. For example, in a case that the effective information includes an activated waveform, an activated modulation scheme, and an activated resource block region, the preset condition may be set to include at least one of the following: a waveform used for transmission by the terminal belongs to the activated waveform, a modulation scheme used for transmission by the terminal belongs to the activated modulation scheme, and a resource block region used for transmission by the terminal belongs to the activated resource block region; or the preset condition may be set to include: a waveform used for transmission by the terminal belongs to the activated waveform, a modulation scheme used for transmission by the terminal belongs to the activated modulation scheme, and a resource block region used for transmission by the terminal belongs to the activated resource block region. In a case that the effective information includes an activated waveform and an activated modulation scheme, the preset condition may be set to include at least one of the following: a waveform used for transmission by the terminal belongs to the activated waveform, and a modulation scheme used for transmission by the terminal belongs to the activated modulation scheme; or the preset condition may be set to include: a waveform used for transmission by the terminal belongs to the activated waveform, and a modulation scheme used for transmission by the terminal belongs to the activated modulation scheme.

For example, in some embodiments, in a case that the effective information includes an activated waveform DFT-s-OFDM, when the terminal performs transmission using the DFT-s-OFDM waveform, the target maximum allowed power boost value may be used to boost at least one of the lower limit value and upper limit value of the target object. When the terminal performs transmission using a CP-OFDM waveform, the lower limit value and upper limit value of the target object are not boosted.

Optionally, in some embodiments, the boosting, by the terminal, the lower limit value of the target object based on the target maximum allowed power boost value includes at least one of the following:
calculating, by the terminal, a lower limit value P_{CMAX_L,f,c} of the terminal configured maximum output power according to a first calculation formula; and
calculating, by the terminal, a lower limit value P_{UMAX_L,f,c} of the measured peak value of the terminal equivalent isotropically radiated power according to a second calculation formula; where
the first calculation formula is: P_{CMAX_L,f,c} = MIN{P_{EMAX,c} - ΔT_{C,c}, (P_{PowerClass} - ΔP_{PowerClass} + MAPB) - MAX(MAX(MPR_{c} + ΔMPR_{c}, A-MPR_{c}) + ΔT_{IB,c} + ΔT_{C,c} + ΔT_{RxSRS}, P-MPR_{c})}; and the second calculation formula is: P_{UMAX_L,f,c} = P_{PowerClass} + ΔP_{IBE} + MAPB - MAX(MAX(MPR_{f,c}, A-MPR_{f,c}) + ΔMB_{P,n}, P-MPR_{f,c}) - MAX{T(MAX(MPR_{f,c}, A-MPR_{f,c})), T(P-MPR_{f,c})}; where
P_{EMAX,c} is a terminal configured maximum output power allowed by configuration of the network-side device; ΔT_{C,c} is an allowed operating band edge transmission power relaxation; P_{PowerClass} is a terminal maximum output power specified by a preset power class; ΔP_{PowerClass} is an adjustment to maximum output power for a given power class; MAPB is the target maximum allowed power boost value; MPR_{c} and MPR_{f,c} are second maximum power reduction values, the second maximum power reduction value representing an allowed power reduction value for meeting limitation of the terminal radio frequency indicator; ΔMPR_{c} is an allowed maximum power reduction relaxation for serving cell c; A-MPR_{c} and A-MPR_{f,c} are additional maximum power reduction values configured to meet radiated power regulatory requirements; ΔT_{IB,c} is an allowed maximum configured output power relaxation; ΔT_{RxSRS} is a relaxation value allowed for transmission on a non-primary transmit antenna via a sounding reference signal antenna switch; P-MPR_{c} and P-MPR_{f,c} are power management maximum power reduction values used to meet electromagnetic radiation requirements; ΔP_{IBE} is a boost value for uplink power when an in-band emission indicator is relaxed; ΔMB_{P,n} is a relaxation value of an equivalent isotropically radiated power peak value allowed when the terminal supports multiple frequency bands simultaneously; and T() is a tolerance corresponding to different power changes.

Optionally, in some embodiments, the boosting, by the terminal, the upper limit value of the target object based on the target maximum allowed power boost value includes:
calculating, by the terminal, an upper limit value P_{CMAX_H,f,c} of the terminal configured maximum output power according to a third calculation formula; where
the third calculation formula is: ${P}_{CMAX_H , f , c} = MIN \left\{{P}_{EMAX , c}, {P}_{PowerClass}-{ΔP}_{PowerClass}+MAPB\right\} ;$ where
   P_{EMAX,c} is a terminal configured maximum output power allowed by configuration of the network-side device; P_{PowerClass} is a terminal maximum output power specified by a preset power class; ΔP_{PowerClass} is an adjustment to maximum output power for a given power class; and MAPB is the target maximum allowed power boost value.

Optionally, in some embodiments, the boosting, by a terminal, at least one of an upper limit value of a target object or a lower limit value of the target object includes at least one of the following:
boosting, by the terminal, a lower limit value of the terminal configured maximum output power based on a first maximum power reduction value; or
boosting, by the terminal, a lower limit value of the measured peak value of the terminal equivalent isotropically radiated power based on a third maximum power reduction value; where
the first maximum power reduction value is less than a second maximum power reduction value, the third maximum power reduction value is greater than the second maximum power reduction value, and the second maximum power reduction value represents an allowed maximum power reduction value when the terminal radio frequency indicator is not relaxed.

In the embodiments of this application, adjustment may be performed only on the lower limit value of the target object. At least one of the first maximum power reduction value or the third maximum power reduction value is protocol-agreed or indicated by the network-side device.

In the embodiments of this application, in a case that the first maximum power reduction value and the third maximum power reduction value are indicated by the network-side device, the first information may further include the first maximum power reduction value and the third maximum power reduction value. In a case that the first maximum power reduction value and the third maximum power reduction value are protocol-agreed, the first maximum power reduction value and the third maximum power reduction value may be protocol-agreed fixed values, or the first maximum power reduction value and the third maximum power reduction value may be maximum power reduction values determined based on a protocol-agreed maximum power reduction value table. For the calculation of the lower limit value of the terminal configured maximum output power, two tables may be set, where one table (such as Table 1 above) is used to determine, in a case that the first information is not received, the second maximum power reduction value, and calculate the lower limit value of the terminal configured maximum output power based on the second maximum power reduction value; and the other table is used to determine, in a case that the first information is received, the first maximum power reduction value based on this table, and calculate the lower limit value of the terminal configured maximum output power based on the first maximum power reduction value. Similarly, for the calculation of the lower limit value of the measured peak value of the terminal equivalent isotropically radiated power, two tables may be set, where one table (such as Table 1 above) is used to determine, in a case that the first information is not received, the second maximum power reduction value, and calculate the lower limit value of the measured peak value of the terminal equivalent isotropically radiated power based on the second maximum power reduction value; and the other table is used to determine, in a case that the first information is received, the third maximum power reduction value based on this table, and calculate the lower limit value of the measured peak value of the terminal equivalent isotropically radiated power based on the third maximum power reduction value.

Optionally, in some embodiments, the boosting, by the terminal, the lower limit value of the terminal configured maximum output power based on the first information and the first maximum power reduction value includes:
determining, by the terminal, a lower limit value P_{CMAX_L,f,c} of the terminal configured maximum output power according to a fourth calculation formula; where
the fourth calculation formula is: P_{CMAX_L,f,c} = MIN{P_{EMAX,c} - ΔT_{C,c}, (P_{PowerClass} - ΔP_{PowerClass}) - MAX(MAX(MIN(MPR_{c} + ΔMPR_{c}, MPR_{c_relax} + ΔMPR_{c}), A-MPR_{c}) + ΔT_{IB,c} + ΔT_{C,c} + ΔT_{RxSRS}, P-MPR_{c})}; where
P_{EMAX,c} is a terminal configured maximum output power allowed by configuration of the network-side device; ΔT_{C,c} is an allowed operating band edge transmission power relaxation; P_{PowerClass} is a terminal maximum output power specified by a preset power class; ΔP_{PowerClass} is an adjustment to maximum output power for a given power class; MPR_{c} is a second maximum power reduction value; ΔMPR_{c} is an allowed maximum power reduction relaxation for serving cell c; A-MPR_{c} is an additional maximum power reduction configured to meet a radiated power regulatory requirement; ΔT_{IB,c} is an allowed maximum configured output power relaxation; ΔT_{RxSRS} is a relaxation value allowed for transmission on a non-primary transmit antenna via a sounding reference signal antenna switch; and P-MPR_{c} is a power management maximum power reduction value used to meet an electromagnetic radiation requirement; where
in a case that the first information is received, MPR_{c_relax} is the first maximum power reduction value; and in a case that the first information is not received, MPR_{c_relax} is a fourth maximum power reduction value, where the fourth maximum power reduction value is greater than the second maximum power reduction value.

In the embodiments of this application, in both the state where the first information is received and the state where the first information is not received, the lower limit value P_{CMAX_L,f,c} of the terminal configured maximum output power can be calculated using the fourth calculation formula, with the difference lying in the definition of MPR_{c_relax}. The fourth maximum power reduction value may be set to infinity by default.

Optionally, in some embodiments, the boosting, by the terminal, a lower limit value of the measured peak value of the terminal equivalent isotropically radiated power based on a third maximum power reduction value includes:
determining, by the terminal, a lower limit value P_{UMAX_L,f,c} of the measured peak value of the terminal equivalent isotropically radiated power according to a fifth calculation formula; where
the fifth calculation formula is: 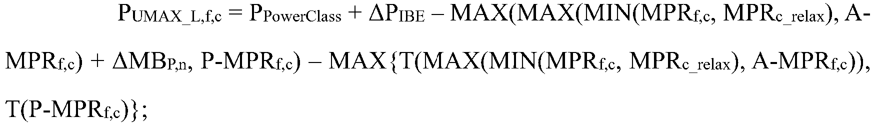 PUMAX_L,f,c = PPowerClass + ΔPIBE - MAX(MAX(MIN(MPRf,c, MPRc_relax), A-MPRf,c) + ΔMBP,n, P-MPRf,c) - MAX{T(MAX(MIN(MPRf,c, MPRc_relax), A-MPRf,c)), T(P-MPRf,c)}; where where P_{PowerClass} is a terminal maximum output power specified by a preset power class; MPR_{f,c} is a second maximum power reduction value; A-MPR_{f,c} is an additional maximum power reduction configured to meet a radiated power regulatory requirement; P-MPR_{f,c} is a power management maximum power reduction value used to meet an electromagnetic radiation requirement; ΔP_{IBE} is a boost value for uplink power when an in-band emission indicator is relaxed; ΔMB_{P,n} is a relaxation value of an equivalent isotropically radiated power peak value allowed when the terminal supports multiple frequency bands simultaneously; and T() is a tolerance corresponding to different power changes; where
in a case that the terminal receives the first information, MPR_{c_relax} is the third maximum power reduction value; and in a case that the first information is not received, MPR_{c_relax} is a fifth maximum power reduction value, where the fifth maximum power reduction value is greater than the second maximum power reduction value.

In the embodiments of this application, in both the state where the first information is received and the state where the first information is not received, the lower limit value P_{UMAX_L,f,c} of the measured peak value of the terminal equivalent isotropically radiated power is calculated using the fifth calculation formula, with the difference lying in the definition of MPR_{c_relax}. The fifth maximum power reduction value may be set to infinity by default.

Optionally, an upper limit value of the lower limit value P_{UMAX_L,f,c} of the measured peak value of the terminal equivalent isotropically radiated power may be EIRPₘₐₓ, where EIRPₘₐₓ represents a maximum equivalent isotropically radiated power required by a radiation regulatory agency.

Optionally, in some embodiments, the boosting, by the terminal, the lower limit value of the terminal configured maximum output power based on the first information and the first maximum power reduction value includes:
determining, by the terminal, a lower limit value P_{CMAX_L,f,c} of the terminal configured maximum output power according to a sixth calculation formula; where
the sixth calculation formula is: P_{CMAX_L,f,c} = MIN{P_{EMAX,c} - ΔT_{C,c}, (P_{PowerClass} - ΔP_{PowerClass}) - MAX(MAX(MPR_{c} + ΔMPR_{c}, A-MPR_{c}) + ΔT_{IB,c} + ΔT_{C,c} + ΔT_{RxSRS}, P-MPR_{c})}; where
P_{EMAX,c} is a terminal configured maximum output power allowed by configuration of the network-side device; ΔT_{C,c} is an allowed operating band edge transmission power relaxation; P_{PowerClass} is a terminal maximum output power specified by a preset power class; ΔP_{PowerClass} is an adjustment to maximum output power for a given power class; ΔMPR_{c} is an allowed maximum power reduction relaxation for serving cell c; A-MPR_{c} is an additional maximum power reduction configured to meet a radiated power regulatory requirement; ΔT_{IB,c} is an allowed maximum configured output power relaxation; ΔT_{RxSRS} is a relaxation value allowed for transmission on a non-primary transmit antenna via a sounding reference signal antenna switch; and P-MPR_{c} is a power management maximum power reduction value used to meet an electromagnetic radiation requirement; where
in a case that the terminal receives the first information, MPR_{c} is the first maximum power reduction value; and in a case that the first information is not received, MPR_{c} is the second maximum power reduction value.

Optionally, in some embodiments, the boosting, by the terminal, the lower limit value of the measured peak value of the terminal equivalent isotropically radiated power based on the first information and the first maximum power reduction value includes:
determining, by the terminal, a lower limit value P_{UMAX_L,f,c} of the measured peak value of the terminal equivalent isotropically radiated power according to a seventh calculation formula; where
the seventh calculation formula is: P_{UMAX_L,f,c} = P_{PowerClass} + ΔP_{IBE} - MAX(MAX(MPR_{f,c}, A-MPR_{f,c}) + ΔMB_{P,n}, P-MPR_{f,c}) - MAX{T(MAX(MPR_{f,c}, A-MPR_{f,c})), T(P-MPR_{f,c})}; where
P_{PowerClass} is a terminal maximum output power specified by a preset power class; A-MPR_{f,c} is an additional maximum power reduction configured to meet a radiated power regulatory requirement; P-MPR_{f,c} is a power management maximum power reduction value used to meet an electromagnetic radiation requirement; ΔP_{IBE} is a boost value for uplink power when an in-band emission indicator is relaxed; and T() is a tolerance corresponding to different power changes; where
in a case that the terminal receives the first information, MPR_{f,c} is the third maximum power reduction value; and in a case that the first information is not received, MPR_{f,c} is the second maximum power reduction value.

Optionally, in some embodiments, the method further includes:
reporting, by the terminal, capability information to the network-side device, where the capability information is used to indicate whether the terminal supports boosting of the target object; where
the boosting, by a terminal, at least one of an upper limit value of a target object or a lower limit value of the target object in a case that the terminal receives first information from a network-side device includes:
   in a case that the terminal supports boosting of the target object and receives the first information from the network-side device, boosting, by the terminal, at least one of the upper limit value of the target object or the lower limit value of the target object.

In the embodiments of this application, the capability information may be understood as or replaced with a terminal power boost with terminal power indicator relaxation (UEPowerBoostWithRelaxation) capability.

In some embodiments, in a case that the terminal does not report the capability information, when the terminal receives the first information from the network-side device, at least one of the upper limit value of the target object or the lower limit value of the target object may be directly boosted. In a case that the terminal reports the capability information, the network-side device may determine, based on the capability information, whether to send the first information.

Referring to FIG. 3, an embodiment of this application further provides a power boosting method. As shown in FIG. 3, the power boosting method includes the following step.

Step 301. A network-side device sends first information to a terminal, where the first information is used to indicate a boosting operation on a target object, the first information is used to trigger the terminal to boost at least one of an upper limit value of the target object or a lower limit value of the target object, and the target object includes at least one of a terminal configured maximum output power or a measured peak value of a terminal equivalent isotropically radiated power.

Optionally, the first information includes at least one of the following:
target indication information, where the target indication information is used to indicate relaxation of a terminal radio frequency indicator or a target radio frequency indicator to be relaxed in a terminal radio frequency indicator; or
a first maximum allowed power boost value, where the first maximum allowed power boost value is used to represent a maximum allowed power boost value when the terminal radio frequency indicator is relaxed.

Optionally, before the sending, by a network-side device, first information to a terminal, the method further includes:
determining, by the network-side device, the first maximum allowed power boost value from multiple candidate maximum allowed power boost values.

Optionally, before the sending, by a network-side device, first information to a terminal, the method further includes:
sending, by the network-side device, second information to the terminal, where the second information includes at least one second maximum allowed power boost value, and each of the second maximum allowed power boost value is associated with at least one terminal radio frequency indicator.

Optionally, the method further includes:
sending, by the network-side device, effective information to the terminal, where the effective information is associated with a first maximum allowed power boost value or a second maximum allowed power boost value, and the effective information includes at least one of the following:
an activated waveform;
an activated modulation scheme; or
an activated resource block region.

Optionally, before the sending, by a network-side device, first information to a terminal, the method further includes:
receiving, by the network-side device, capability information from the terminal, where the capability information is used to indicate whether the terminal supports boosting of the target object; where
the sending, by a network-side device, first information to a terminal includes:
   in a case that the terminal supports boosting of the target object, sending, by the network-side device, the first information to the terminal.

The power boosting method according to the embodiments of this application may be executed by a power boosting apparatus. In the embodiments of this application, the power boosting apparatus executing the power boosting method is used as an example to describe a power boosting apparatus according to an embodiment of this application.

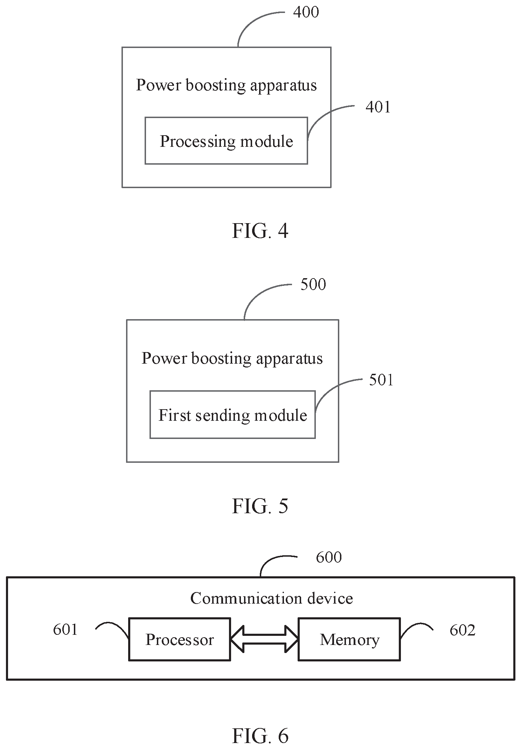

Referring to FIG. 4, an embodiment of this application further provides a power boosting apparatus. As shown in FIG. 4, the power boosting apparatus 400 includes:
a processing module 401 configured to boost at least one of an upper limit value of a target object or a lower limit value of the target object in a case that a terminal receives first information from a network-side device, where the target object includes at least one of a terminal configured maximum output power or a measured peak value of a terminal equivalent isotropically radiated power; where
the first information is used to indicate the terminal to perform a boosting operation on the target object.

Optionally, the first information includes at least one of the following:
target indication information, where the target indication information is used to indicate relaxation of a terminal radio frequency indicator or a target radio frequency indicator to be relaxed in a terminal radio frequency indicator; or
a first maximum allowed power boost value, where the first maximum allowed power boost value is used to represent a maximum allowed power boost value when the terminal radio frequency indicator is relaxed.

Optionally, the processing module 401 includes:
a determining unit configured to, in a case that the terminal receives the first information from the network-side device, determine a target maximum allowed power boost value; and
a boosting unit configured to boost at least one of the upper limit value of the target object or the lower limit value of the target object based on the target maximum allowed power boost value; where
in a case that the first information includes the first maximum allowed power boost value, the target maximum allowed power boost value is the first maximum allowed power boost value; and in a case that the first information includes the target indication information, the target maximum allowed power boost value includes any one of the following:
   a protocol-agreed maximum allowed power boost value;
   a second maximum allowed power boost value associated with the target radio frequency indicator among at least one second maximum allowed power boost value; and
   a maximum allowed power boost value determined based on at least one of a waveform, a modulation scheme, or a resource block region.

Optionally, the power boosting apparatus further includes:
a first receiving module configured to, in a case that the target maximum allowed power boost value is the second maximum allowed power boost value and the terminal receives the first information from the network-side device, receive second information from the network-side device, where the second information includes the at least one second maximum allowed power boost value, and each of the second maximum allowed power boost value is associated with at least one terminal radio frequency indicator.

Optionally, in a case that the target maximum allowed power boost value is the first maximum allowed power boost value or the second maximum allowed power boost value, effective information of the target maximum allowed power boost value is protocol-agreed or indicated by the network-side device; where
the effective information includes at least one of the following:
an activated waveform;
an activated modulation scheme; or
an activated resource block region.

Optionally, the boosting unit is specifically configured to perform at least one of the following:
calculating a lower limit value P_{CMAX_L,f,c} of the terminal configured maximum output power according to a first calculation formula; and
calculating a lower limit value P_{UMAX_L,f,c} of the measured peak value of the terminal equivalent isotropically radiated power according to a second calculation formula; where
the first calculation formula is: P_{CMAX_L,f,c} = MIN{P_{EMAX,c} - ΔT_{C,c}, (P_{PowerClass} - ΔP_{PowerClass} + MAPB) - MAX(MAX(MPR_{c} + ΔMPR_{c}, A-MPR_{c}) + ΔT_{IB,c} + ΔT_{C,c} + ΔT_{RxSRS}, P-MPR_{c})}; and the second calculation formula is: P_{UMAX_L,f,c} = P_{PowerClass} + ΔP_{IBE} + MAPB - MAX(MAX(MPR_{f,c}, A-MPR_{f,c}) + ΔMB_{P,n}, P-MPR_{f,c}) - MAX{T(MAX(MPR_{f,c}, A-MPR_{f,c})), T(P-MPR_{f,c})}; where
P_{EMAX,c} is a terminal configured maximum output power allowed by configuration of the network-side device; ΔT_{C,c} is an allowed operating band edge transmission power relaxation; P_{PowerClass} is a terminal maximum output power specified by a preset power class; ΔP_{PowerClass} is an adjustment to maximum output power for a given power class; MAPB is the target maximum allowed power boost value; MPR_{c} and MPR_{f,c} are second maximum power reduction values, the second maximum power reduction value representing an allowed power reduction value for meeting limitation of the terminal radio frequency indicator; ΔMPR_{c} is an allowed maximum power reduction relaxation for serving cell c; A-MPR_{c} and A-MPR_{f,c} are additional maximum power reduction values configured to meet radiated power regulatory requirements; ΔT_{IB,c} is an allowed maximum configured output power relaxation; ΔT_{RxSRS} is a relaxation value allowed for transmission on a non-primary transmit antenna via a sounding reference signal antenna switch; P-MPR_{c} and P-MPR_{f,c} are power management maximum power reduction values used to meet electromagnetic radiation requirements; ΔP_{IBE} is a boost value for uplink power when an in-band emission indicator is relaxed; ΔMB_{P,n} is a relaxation value of an equivalent isotropically radiated power peak value allowed when the terminal supports multiple frequency bands simultaneously; and T() is a tolerance corresponding to different power changes.

Optionally, the boosting unit is specifically configured to:
calculate an upper limit value P_{CMAX_H,f,c} of the terminal configured maximum output power according to a third calculation formula; where
the third calculation formula is:
   ${P}_{CMAX_H , f , c} = MIN \left\{{P}_{EMAX , c}, {P}_{PowerClass}-Δ{P}_{PowerClass}+MAPB\right\} ;$where
   P_{EMAX,c} is a terminal configured maximum output power allowed by configuration of the network-side device; P_{PowerClass} is a terminal maximum output power specified by a preset power class; ΔP_{PowerClass} is an adjustment to maximum output power for a given power class; and MAPB is the target maximum allowed power boost value.

Optionally, the processing module 401 is configured to perform at least one of the following:
boosting a lower limit value of the terminal configured maximum output power based on a first maximum power reduction value; and
boosting a lower limit value of the measured peak value of the terminal equivalent isotropically radiated power based on a third maximum power reduction value; where
the first maximum power reduction value is less than a second maximum power reduction value, the third maximum power reduction value is less than the second maximum power reduction value, and the second maximum power reduction value represents an allowed maximum power reduction value when the terminal radio frequency indicator is not relaxed.

Optionally, at least one of the first maximum power reduction value or the third maximum power reduction value is protocol-agreed or indicated by the network-side device.

Optionally, the processing module 401 is configured to determine a lower limit value P_{CMAX_L,f,c} of the terminal configured maximum output power according to a fourth calculation formula; where
the fourth calculation formula is: P_{CMAX_L,f,c} = MIN{P_{EMAX,c} - ΔT_{C,c}, (P_{PowerClass} - ΔP_{PowerClass}) - MAX(MAX(MIN(MPR_{c} + ΔMPR_{c}, MPR_{c_relax} + ΔMPR_{c}), A-MPR_{c}) + ΔT_{IB,c} + ΔT_{C,c} + ΔT_{RxSRS}, P-MPR_{c})}; where
P_{EMAX,c} is a terminal configured maximum output power allowed by configuration of the network-side device; ΔT_{C,c} is an allowed operating band edge transmission power relaxation; P_{PowerClass} is a terminal maximum output power specified by a preset power class; ΔP_{PowerClass} is an adjustment to maximum output power for a given power class; MPR_{c} is a second maximum power reduction value; ΔMPR_{c} is an allowed maximum power reduction relaxation for serving cell c; A-MPR_{c} is an additional maximum power reduction configured to meet a radiated power regulatory requirement; ΔT_{IB,c} is an allowed maximum configured output power relaxation; ΔT_{RxSRS} is a relaxation value allowed for transmission on a non-primary transmit antenna via a sounding reference signal antenna switch; and P-MPR_{c} is a power management maximum power reduction value used to meet an electromagnetic radiation requirement; where
in a case that the first information is received, MPR_{c_relax} is the first maximum power reduction value; and in a case that the first information is not received, MPR_{c_relax} is a fourth maximum power reduction value, where the fourth maximum power reduction value is greater than the second maximum power reduction value.

Optionally, the processing module 401 is configured to determine a lower limit value P_{UMAX_L,f,c} of the measured peak value of the terminal equivalent isotropically radiated power according to a fifth calculation formula; where
the fifth calculation formula is: 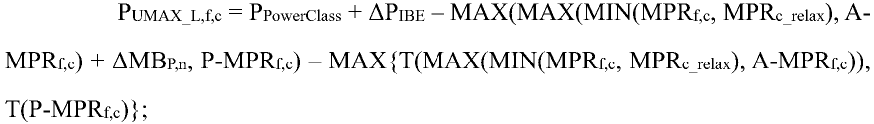 PUMAX_L,f,c = PPowerClass + ΔPIBE - MAX(MAX(MIN(MPRf,c, MPRc_relax), A-MPRf,c) + ΔMBP,n, P-MPRf,c) - MAX{T(MAX(MIN(MPRf,c, MPRc_relax), A-MPRf,c)), T(P-MPRf,c)}; where where
P_{PowerClass} is a terminal maximum output power specified by a preset power class; MPR_{f,c} is a second maximum power reduction value; A-MPR_{f,c} is an additional maximum power reduction configured to meet a radiated power regulatory requirement; P-MPR_{f,c} is a power management maximum power reduction value used to meet an electromagnetic radiation requirement; ΔP_{IBE} is a boost value for uplink power when an in-band emission indicator is relaxed; ΔMB_{P,n} is a relaxation value of an equivalent isotropically radiated power peak value allowed when the terminal supports multiple frequency bands simultaneously; and T() is a tolerance corresponding to different power changes; where
in a case that the terminal receives the first information, MPR_{c_relax} is the third maximum power reduction value; and in a case that the first information is not received, MPR_{c_relax} is a fifth maximum power reduction value, where the fifth maximum power reduction value is greater than the second maximum power reduction value.

Optionally, the processing module 401 is configured to determine a lower limit value P_{CMAX_L,f,c} of the terminal configured maximum output power according to a sixth calculation formula; where
the sixth calculation formula is: P_{CMAX_L,f,c} = MIN{P_{EMAX,c} - ΔT_{C,c}, (P_{PowerClass} - ΔP_{PowerClass}) - MAX(MAX(MPR_{c} + ΔMPR_{c}, A-MPR_{c}) + ΔT_{IB,c} + ΔT_{C,c} + ΔT_{RxSRS}, P-MPR_{c})}; where
P_{EMAX,c} is a terminal configured maximum output power allowed by configuration of the network-side device; ΔT_{C,c} is an allowed operating band edge transmission power relaxation; P_{PowerClass} is a terminal maximum output power specified by a preset power class; ΔP_{PowerClass} is an adjustment to maximum output power for a given power class; ΔMPR_{c} is an allowed maximum power reduction relaxation for serving cell c; A-MPR_{c} is an additional maximum power reduction configured to meet a radiated power regulatory requirement; ΔT_{IB,c} is an allowed maximum configured output power relaxation; ΔT_{RxSRS} is a relaxation value allowed for transmission on a non-primary transmit antenna via a sounding reference signal antenna switch; and P-MPR_{c} is a power management maximum power reduction value used to meet an electromagnetic radiation requirement; where
in a case that the terminal receives the first information, MPR_{c} is the first maximum power reduction value; and in a case that the first information is not received, MPR_{c} is the second maximum power reduction value.

Optionally, the processing module 401 is configured to determine a lower limit value P_{UMAX_L,f,c} of the measured peak value of the terminal equivalent isotropically radiated power according to a seventh calculation formula; where
the seventh calculation formula is: P_{UMAX_L,f,c} = P_{PowerClass} + ΔP_{IBE} - MAX(MAX(MPR_{f,c}, A-MPR_{f,c}) + ΔMB_{P,n}, P-MPR_{f,c}) - MAX{T(MAX(MPR_{f,c}, A-MPR_{f,c})), T(P-MPR_{f,c})}; where
P_{PowerClass} is a terminal maximum output power specified by a preset power class; A-MPR_{f,c} is an additional maximum power reduction configured to meet a radiated power regulatory requirement; P-MPR_{f,c} is a power management maximum power reduction value used to meet an electromagnetic radiation requirement; ΔP_{IBE} is a boost value for uplink power when an in-band emission indicator is relaxed; and T() is a tolerance corresponding to different power changes; where
in a case that the terminal receives the first information, MPR_{f,c} is the third maximum power reduction value; and in a case that the first information is not received, MPR_{f,c} is the second maximum power reduction value.

Optionally, the power boosting apparatus 400 further includes:
a second sending module configured to report capability information to the network-side device, where the capability information is used to indicate whether the terminal supports boosting of the target object; where
the boosting, by a terminal, at least one of an upper limit value of the target object or a lower limit value of the target object in a case that the terminal receives first information from a network-side device includes:
   in a case that the terminal supports boosting of the target object and receives the first information from the network-side device, boosting, by the terminal, at least one of the upper limit value of the target object or the lower limit value of the target object.

Referring to FIG. 5, an embodiment of this application further provides a power boosting apparatus. As shown in FIG. 5, the power boosting apparatus 500 includes:
a first sending module 501 configured to send first information to a terminal, where the first information is used to indicate a boosting operation on a target object, the first information is used to trigger the terminal to boost at least one of an upper limit value of the target object or a lower limit value of the target object, and the target object includes at least one of a terminal configured maximum output power or a measured peak value of a terminal equivalent isotropically radiated power.

Optionally, the first information includes at least one of the following:
target indication information, where the target indication information is used to indicate relaxation of a terminal radio frequency indicator or a target radio frequency indicator to be relaxed in a terminal radio frequency indicator; or
a first maximum allowed power boost value, where the first maximum allowed power boost value is used to represent a maximum allowed power boost value when the terminal radio frequency indicator is relaxed.

Optionally, the power boosting apparatus 500 further includes:
a determining module configured to determine the first maximum allowed power boost value from multiple candidate maximum allowed power boost values.

Optionally, the first sending module 501 is further configured to: send second information to the terminal, where the second information includes at least one second maximum allowed power boost value, and each of the second maximum allowed power boost value is associated with at least one terminal radio frequency indicator.

Optionally, the first sending module 501 is further configured to: send effective information to the terminal, where the effective information is associated with a first maximum allowed power boost value or a second maximum allowed power boost value, and the effective information includes at least one of the following:
an activated waveform;
an activated modulation scheme; or
an activated resource block region.

Optionally, the power boosting apparatus 500 further includes:
a second receiving module configured to receive capability information from the terminal, where the capability information is used to indicate whether the terminal supports boosting of the target object; where
the first sending module 501 is specifically configured to: in a case that the terminal supports boosting of the target object, send the first information to the terminal.

The power boosting apparatus in the embodiments of this application may be an electronic device, such as an electronic device having an operating system, or may be a component in an electronic device, such as an integrated circuit or a chip. The electronic device may be a terminal or another device different from a terminal. For example, the terminal may include but is not limited to the types of the terminal 11 listed above, and the another device may be a server, a network attached storage (Network Attached Storage, NAS), or the like, which are not specifically limited in the embodiments of this application.

The power boosting apparatus according to the embodiments of this application can implement various processes implemented by the method embodiments in FIGs. 2 and 3, with the same technical effects achieved. To avoid repetition, details are not described herein again.

As shown in FIG. 6, an embodiment of this application further provides a communication device 600 including a processor 601 and a memory 602. The memory 602 stores a program or instructions capable of running on the processor 601. When the program or instructions are executed by the processor 601, the steps of the foregoing power boosting method embodiments are implemented, with the same technical effects achieved. To avoid repetition, details are not described herein again.

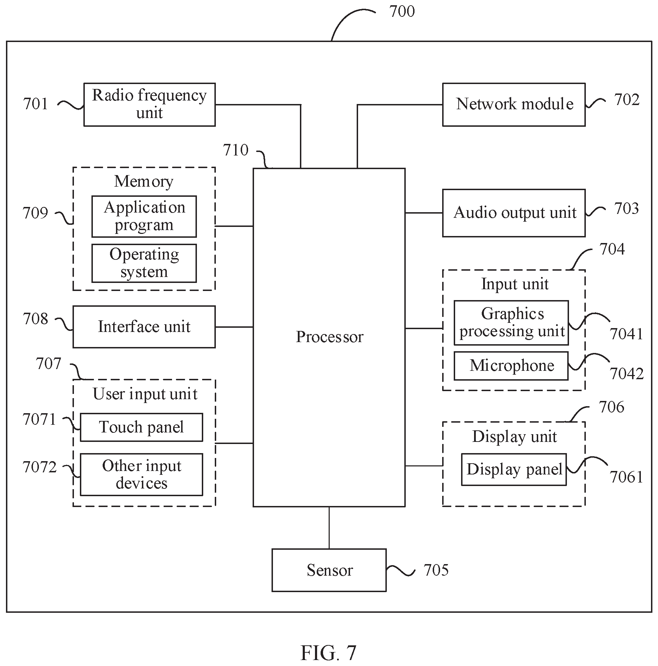

An embodiment of this application further provides a terminal including a processor and a communication interface, where the communication interface is coupled to the processor, and the processor is configured to run a program or instructions to implement the steps in the method embodiment shown in FIG. 2. This terminal embodiment corresponds to the foregoing terminal-side method embodiment, and the implementation processes and implementations of the foregoing method embodiments can all be applied to this terminal embodiment, with the same technical effects achieved. Specifically, FIG. 7 is a schematic diagram of a hardware structure of a terminal implementing an embodiment of this application.

The terminal 700 includes but is not limited to at least some components of: a radio frequency unit 701, a network module 702, an audio output unit 703, an input unit 704, a sensor 705, a display unit 706, a user input unit 707, an interface unit 708, a memory 709, a processor 710, and the like.

Those skilled in the art can understand that the terminal 700 may further include a power supply (such as a battery) supplying power to the components, and the power supply may be logically connected to the processor 710 through a power management system, so as to implement functions such as charging management, discharging management, and power consumption management by using the power management system. The structure of the terminal shown in FIG. 7 does not constitute any limitation on the terminal. The terminal may include more or fewer components than shown in the figure, or a combination of some components, or the components disposed differently. Details are not described herein.

It should be understood that in the embodiments of this application, the input unit 704 may include a graphics processing unit (Graphics Processing Unit, GPU) 7041 and a microphone 7042. The graphics processor 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or an on/off key), a trackball, a mouse, and a joystick. Details are not described herein.

In the embodiments of this application, after receiving downlink data from a network-side device, the radio frequency unit 701 may transmit the downlink data to the processor 710 for processing. In addition, the radio frequency unit 701 may send uplink data to the network-side device. Typically, the radio frequency unit 701 includes but is not limited to an antenna, an amplifier, a transceiver, a coupler, a low noise amplifier, and a duplexer.

The memory 709 may be configured to store a software program or instructions and various data. The memory 709 may mainly include a first storage area for storing programs or instructions and a second storage area for storing data. The first storage area may store an operating system, an application program or instructions required by at least one function (for example, a sound play function or an image play function), and the like. In addition, the memory 709 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), or a direct rambus random access memory (Direct Rambus RAM, DRRAM). The memory 709 in the embodiments of this application includes but is not limited to these and any other suitable types of memory.

The processor 710 may include one or more processing units. Optionally, the processor 710 integrates an application processor and a modem processor. The application processor mainly processes operations related to an operating system, a user interface, an application program, or the like. The modem processor, such as a baseband processor, mainly processes radio communication signals. It can be understood that the modem processor may alternatively be not integrated into the processor 710.

The processor 710 is configured to boost, for a terminal, at least one of an upper limit value of a target object or a lower limit value of the target object in a case that first information is received from a network-side device, where the target object includes at least one of a terminal configured maximum output power or a measured peak value of a terminal equivalent isotropically radiated power; where
the first information is used to indicate the terminal to perform a boosting operation on the target object.

It can be understood that for implementation processes of the implementations mentioned in this embodiment, reference may be made to the relevant descriptions of the terminal-side method embodiments, with the same or corresponding technical effects achieved. To avoid repetition, details are not described herein again.

An embodiment of this application further provides a network-side device including a processor and a communication interface, where the communication interface is coupled to the processor, and the processor is configured to run a program or instructions to implement the steps in the method embodiment shown in FIG. 3. This network-side device embodiment corresponds to the foregoing network-side device method embodiment, and the implementation processes and implementations of the foregoing method embodiment can all be applied to this network-side device embodiment, with the same technical effects achieved.

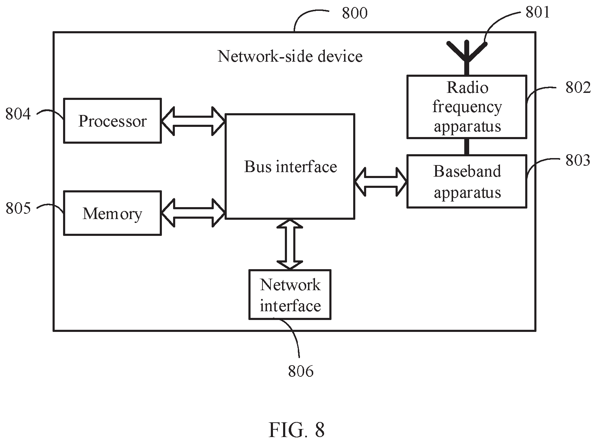

Specifically, an embodiment of this application further provides a network-side device. As shown in FIG. 8, the network-side device 800 includes: an antenna 801, a radio frequency apparatus 802, a baseband apparatus 803, a processor 804 and a memory 805. The antenna 801 is connected to the radio frequency apparatus 802. In an uplink direction, the radio frequency apparatus 802 receives information via the antenna 801, and sends the received information to the baseband apparatus 803 for processing. In a downlink direction, the baseband apparatus 803 processes to-be-sent information, and sends the information to the radio frequency apparatus 802; and the radio frequency apparatus 802 processes the received information and then sends the information out via the antenna 801.

The method executed by the network-side device in the foregoing embodiments can be implemented in the baseband apparatus 803, and the baseband apparatus 803 includes a baseband processor.

The baseband apparatus 803 may include, for example, at least one baseband board, where multiple chips are disposed on the baseband board. As shown in FIG. 8, one chip is, for example, a baseband processor, and connected to the memory 805 via a bus interface, to invoke the program in the memory 805 to perform the operations of the network-side device shown in the foregoing method embodiments.

The network-side device may further include a network interface 806. The interface is, for example, a common public radio interface (Common Public Radio Interface, CPRI).

Specifically, the network-side device 800 according to the embodiment of this application further includes: instructions or a program stored on the memory 805 and capable of running on the processor 804. The processor 804 invokes the instructions or program in the memory 805 to execute the method executed by the modules shown in FIG. 5, with the same technical effects achieved. To avoid repetition, details are not described herein again.

An embodiment of this application further provides a readable storage medium, where the readable storage medium stores a program or instructions. When the program or instructions are executed by a processor, the processes of the foregoing power boosting method embodiments are implemented, with the same technical effects achieved. To avoid repetition, details are not described herein again.

The processor is a processor in the terminal described in the foregoing embodiments. The readable storage medium includes a computer-readable storage medium, such as a computer read-only memory ROM, a random access memory RAM, a magnetic disk, or a compact disc. In some examples, the readable storage medium may be a non-transitory readable storage medium.

An embodiment of this application further provides a chip, where the chip includes a processor and a communication interface, the communication interface is coupled to the processor, and the processor is configured to run a program or instructions to implement the processes of the foregoing power boosting method embodiments, with the same technical effects achieved. To avoid repetition, details are not described herein again.

It should be understood that the chip mentioned in the embodiments of this application may also be referred to as a system-level chip, a system chip, a chip system, a system on chip, or the like.

An embodiment of this application further provides a computer program/program product, where the computer program/program product is stored in a storage medium, and the computer program/program product is executed by at least one processor to implement the processes of the foregoing power boosting method embodiments, with the same technical effects achieved. To avoid repetition, details are not described herein again.

An embodiment of this application further provides a wireless communication system including: a terminal and a network-side device, where the terminal may be configured to perform the steps of the foregoing power boosting method on the terminal side, and the network-side device may be configured to perform the steps of the foregoing power boosting method on the network-side device.

It should be noted that in this specification, the terms "include", "comprise", or any of their variants are intended to cover a non-exclusive inclusion, such that a process, method, article, or apparatus that includes a series of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, those skilled in the art may clearly understand that the method in the foregoing embodiments may be implemented by software with a necessary general hardware platform. Certainly, the method in the foregoing embodiments may also be implemented by hardware. The computer software product is stored in a storage medium (such as a ROM, a RAM, a magnetic disk, or a compact disc), and includes several instructions for instructing a terminal or a network-side device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other implementations without departing from principles of this application and the protection scope of the claims, and all such implementations shall fall within the protection scope of this application.

## Claims

1. A power boosting method, comprising:
boosting, by a terminal, at least one of an upper limit value of a target object or a lower limit value of the target object in a case that the terminal receives first information from a network-side device, wherein the target object comprises at least one of a terminal configured maximum output power or a measured peak value of a terminal equivalent isotropically radiated power; wherein
the first information is used to indicate the terminal to perform a boosting operation on the target object.

2. The method according to claim 1, wherein the first information comprises at least one of the following:
target indication information, wherein the target indication information is used to indicate relaxation of a terminal radio frequency indicator or a target radio frequency indicator to be relaxed in a terminal radio frequency indicator; or
a first maximum allowed power boost value, wherein the first maximum allowed power boost value is used to represent a maximum allowed power boost value when the terminal radio frequency indicator is relaxed.

3. The method according to claim 2, wherein the boosting, by a terminal, at least one of an upper limit value of a target object or a lower limit value of the target object in a case that the terminal receives first information from a network-side device comprises:
in a case that the terminal receives the first information from the network-side device, determining a target maximum allowed power boost value; and
boosting, by the terminal, at least one of the upper limit value of the target object or the lower limit value of the target object based on the target maximum allowed power boost value; wherein
in a case that the first information comprises the first maximum allowed power boost value, the target maximum allowed power boost value is the first maximum allowed power boost value; and in a case that the first information comprises the target indication information, the target maximum allowed power boost value comprises any one of the following:
a protocol-agreed maximum allowed power boost value;
a second maximum allowed power boost value associated with the target radio frequency indicator among at least one second maximum allowed power boost value; and
a maximum allowed power boost value determined based on at least one of a waveform, a modulation scheme, or a resource block region.

4. The method according to claim 3, wherein in a case that the target maximum allowed power boost value is a second maximum allowed power boost value, before the boosting, by a terminal, at least one of an upper limit value of a target object or a lower limit value of the target object in a case that the terminal receives first information from a network-side device, the method further comprises:
receiving, by the terminal, second information from the network-side device, wherein the second information comprises the at least one second maximum allowed power boost value, and each of the second maximum allowed power boost value is associated with at least one terminal radio frequency indicator.

5. The method according to claim 3, wherein in a case that the target maximum allowed power boost value is the first maximum allowed power boost value or the second maximum allowed power boost value, effective information of the target maximum allowed power boost value is protocol-agreed or indicated by the network-side device; wherein
the effective information comprises at least one of the following:
an activated waveform;
an activated modulation scheme; or
an activated resource block region.

6. The method according to claim 3, wherein the boosting, by the terminal, the lower limit value of the target object based on the target maximum allowed power boost value comprises at least one of the following:
calculating, by the terminal, a lower limit value P_{CMAX_L,f,c} of the terminal configured maximum output power according to a first calculation formula; and
calculating, by the terminal, a lower limit value P_{UMAX_L,f,c} of the measured peak value of the terminal equivalent isotropically radiated power according to a second calculation formula; wherein
the first calculation formula is: P_{CMAX_L,f,c} = MIN{P_{EMAX,c} - ΔT_{C,c}, (P_{PowerClass} - ΔP_{PowerClass} + MAPB) - MAX(MAX(MPR_{c} + ΔMPR_{c}, A-MPR_{c}) + ΔT_{IB,c} + ΔT_{C,c} + ΔT_{RxSRS}, P-MPR_{c})}; and the second calculation formula is: P_{UMAX_L,f,c} = P_{PowerClass} + ΔP_{IBE} + MAPB - MAX(MAX(MPR_{f,c}, A-MPR_{f,c}) + ΔMB_{P,n}, P-MPR_{f,c}) - MAX{T(MAX(MPR_{f,c}, A-MPR_{f,c})), T(P-MPR_{f,c})}; wherein
P_{EMAX,c} is a terminal configured maximum output power allowed by configuration of the network-side device; ΔT_{C,c} is an allowed operating band edge transmission power relaxation; P_{PowerClass} is a terminal maximum output power specified by a preset power class; ΔP_{PowerClass} is an adjustment to maximum output power for a given power class; MAPB is the target maximum allowed power boost value; MPR_{c} and MPR_{f,c} are second maximum power reduction values, the second maximum power reduction value representing an allowed power reduction value for meeting limitation of the terminal radio frequency indicator; ΔMPR_{c} is an allowed maximum power reduction relaxation for serving cell c; A-MPR_{c} and A-MPR_{f,c} are additional maximum power reduction values configured to meet radiated power regulatory requirements; ΔT_{IB,c} is an allowed maximum configured output power relaxation; ΔT_{RxSRS} is a relaxation value allowed for transmission on a non-primary transmit antenna via a sounding reference signal antenna switch; P-MPR_{c} and P-MPR_{f,c} are power management maximum power reduction values used to meet electromagnetic radiation requirements; ΔP_{IBE} is a boost value for uplink power when an in-band emission indicator is relaxed; ΔMB_{P,n} is a relaxation value of an equivalent isotropically radiated power peak value allowed when the terminal supports multiple frequency bands simultaneously; and T() is a tolerance corresponding to different power changes.

7. The method according to claim 3, wherein the boosting, by the terminal, the upper limit value of the target object based on the target maximum allowed power boost value comprises:
calculating, by the terminal, an upper limit value P_{CMAX_H,f,c} of the terminal configured maximum output power according to a third calculation formula; wherein
the third calculation formula is: ${P}_{CMAX_H , f , c} = MIN \left\{{P}_{EMAX , c}, {P}_{PowerClass}-{ΔP}_{PowerClass}+MAPB\right\} ;$ wherein
P_{EMAX,c} is a terminal configured maximum output power allowed by configuration of the network-side device; P_{PowerClass} is a terminal maximum output power specified by a preset power class; ΔP_{PowerClass} is an adjustment to maximum output power for a given power class; and MAPB is the target maximum allowed power boost value.

8. The method according to claim 2, wherein the boosting, by a terminal, at least one of an upper limit value of a target object or a lower limit value of the target object comprises at least one of the following:
boosting, by the terminal, a lower limit value of the terminal configured maximum output power based on a first maximum power reduction value; or
boosting, by the terminal, a lower limit value of the measured peak value of the terminal equivalent isotropically radiated power based on a third maximum power reduction value; wherein
the first maximum power reduction value is less than a second maximum power reduction value, the third maximum power reduction value is less than the second maximum power reduction value, and the second maximum power reduction value represents an allowed maximum power reduction value when the terminal radio frequency indicator is not relaxed.

9. The method according to claim 8, wherein at least one of the first maximum power reduction value or the third maximum power reduction value is protocol-agreed or indicated by the network-side device.

10. The method according to claim 8, wherein the boosting, by the terminal, the lower limit value of the terminal configured maximum output power based on the first information and the first maximum power reduction value comprises:
determining, by the terminal, a lower limit value P_{CMAX_L,f,c} of the terminal configured maximum output power according to a fourth calculation formula; wherein
the fourth calculation formula is: P_{CMAX_L,f,c} = MIN{P_{EMAX,c} - ΔT_{C,c}, (P_{PowerClass} - ΔP_{PowerClass}) - MAX(MAX(MIN(MPR_{c} + ΔMPR_{c}, MPR_{c_relax} + ΔMPR_{c}), A-MPR_{c}) + ΔT_{IB,c} + ΔT_{C,c} + ΔT_{RxSRS}, P-MPR_{c})}; wherein
P_{EMAX,c} is a terminal configured maximum output power allowed by configuration of the network-side device; ΔT_{C,c} is an allowed operating band edge transmission power relaxation; P_{PowerClass} is a terminal maximum output power specified by a preset power class; ΔP_{PowerClass} is an adjustment to maximum output power for a given power class; MPR_{c} is a second maximum power reduction value; ΔMPR_{c} is an allowed maximum power reduction relaxation for serving cell c; A-MPR_{c} is an additional maximum power reduction configured to meet radiated power regulatory requirement; ΔT_{IB,c} is an allowed maximum configured output power relaxation; ΔT_{RxSRS} is a relaxation value allowed for transmission on a non-primary transmit antenna via a sounding reference signal antenna switch; and P-MPR_{c} is a power management maximum power reduction value used to meet an electromagnetic radiation requirement; wherein
in a case that the first information is received, MPR_{c_relax} is the first maximum power reduction value; and in a case that the first information is not received, MPR_{c_relax} is a fourth maximum power reduction value, wherein the fourth maximum power reduction value is greater than the second maximum power reduction value.

11. The method according to claim 8, wherein the boosting, by the terminal, a lower limit value of the measured peak value of the terminal equivalent isotropically radiated power based on a third maximum power reduction value comprises:
determining, by the terminal, a lower limit value P_{UMAX_L,f,c} of the measured peak value of the terminal equivalent isotropically radiated power according to a fifth calculation formula; wherein
the fifth calculation formula is: 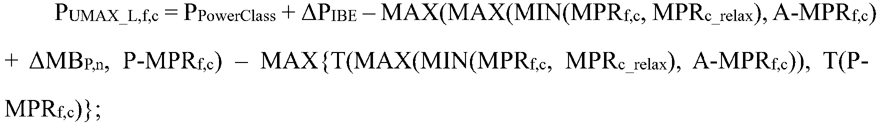 PUMAX_L,f,c = PPowerClass + ΔPIBE - MAX(MAX(MIN(MPRf,c, MPRc_relax), A-MPRf,c) + ΔMBP,n, P-MPRf,c) - MAX{T(MAX(MIN(MPRf,c, MPRc_relax), A-MPRf,c)), T(P-MPRf,c)}; wherein wherein
P_{PowerClass} is a terminal maximum output power specified by a preset power class; MPR_{f,c} is a second maximum power reduction value; A-MPR_{f,c} is an additional maximum power reduction configured to meet a radiated power regulatory requirement; P-MPR_{f,c} is a power management maximum power reduction value used to meet an electromagnetic radiation requirement; ΔP_{IBE} is a boost value for uplink power when an in-band emission indicator is relaxed; ΔMB_{P,n} is a relaxation value of an equivalent isotropically radiated power peak value allowed when the terminal supports multiple frequency bands simultaneously; and T() is a tolerance corresponding to different power changes; wherein
in a case that the terminal receives the first information, MPR_{c_relax} is the third maximum power reduction value; and in a case that the first information is not received, MPR_{c_relax} is a fifth maximum power reduction value, wherein the fifth maximum power reduction value is greater than the second maximum power reduction value.

12. The method according to claim 8, wherein the boosting, by the terminal, the lower limit value of the terminal configured maximum output power based on the first information and the first maximum power reduction value comprises:
determining, by the terminal, a lower limit value P_{CMAX_L,f,c} of the terminal configured maximum output power according to a sixth calculation formula; wherein
the sixth calculation formula is: P_{CMAX_L,f,c} = MIN{P_{EMAX,c} - ΔT_{C,c}, (P_{PowerClass} - ΔP_{PowerClass}) - MAX(MAX(MPR_{c} + ΔMPR_{c}, A-MPR_{c}) + ΔT_{IB,c} + ΔT_{C,c} + ΔT_{RxSRS}, P-MPR_{c})}; wherein
P_{EMAX,c} is a terminal configured maximum output power allowed by configuration of the network-side device; ΔT_{C,c} is an allowed operating band edge transmission power relaxation; P_{PowerClass} is a terminal maximum output power specified by a preset power class; ΔP_{PowerClass} is an adjustment to maximum output power for a given power class; ΔMPR_{c} is an allowed maximum power reduction relaxation for serving cell c; A-MPR_{c} is an additional maximum power reduction configured to meet a radiated power regulatory requirement; ΔT_{IB,c} is an allowed maximum configured output power relaxation; ΔT_{RxSRS} is a relaxation value allowed for transmission on a non-primary transmit antenna via a sounding reference signal antenna switch; and P-MPR_{c} is a power management maximum power reduction value used to meet an electromagnetic radiation requirement; where
in a case that the terminal receives the first information, MPR_{c} is the first maximum power reduction value; and in a case that the first information is not received, MPR_{c} is the second maximum power reduction value.

13. The method according to claim 8, wherein the boosting, by the terminal, the lower limit value of the measured peak value of the terminal equivalent isotropically radiated power based on the first information and the first maximum power reduction value comprises:
determining, by the terminal, a lower limit value P_{UMAX_L,f,c} of the measured peak value of the terminal equivalent isotropically radiated power according to a seventh calculation formula; wherein
the seventh calculation formula is: P_{UMAX_L,f,c} = P_{PowerClass} + ΔP_{IBE} - MAX(MAX(MPR_{f,c}, A-MPR_{f,c}) + ΔMB_{P,n}, P-MPR_{f,c}) - MAX{T(MAX(MPR_{f,c}, A-MPR_{f,c})), T(P-MPR_{f,c})}; wherein
P_{PowerClass} is a terminal maximum output power specified by a preset power class; A-MPR_{f,c} is an additional maximum power reduction configured to meet a radiated power regulatory requirement; P-MPR_{f,c} is a power management maximum power reduction value used to meet an electromagnetic radiation requirement; ΔP_{IBE} is a boost value for uplink power when an in-band emission indicator is relaxed; and T() is a tolerance corresponding to different power changes; wherein
in a case that the terminal receives the first information, MPR_{f,c} is the third maximum power reduction value; and in a case that the first information is not received, MPR_{f,c} is the second maximum power reduction value.

14. The method according to any one of claims 1 to 13, wherein the method further comprises:
reporting, by the terminal, capability information to the network-side device, wherein the capability information is used to indicate whether the terminal supports boosting of the target object; wherein
the boosting, by a terminal, at least one of an upper limit value of a target object or a lower limit value of the target object in a case that the terminal receives first information from a network-side device comprises:
in a case that the terminal supports boosting of the target object and receives the first information from the network-side device, boosting, by the terminal, at least one of the upper limit value of the target object or the lower limit value of the target object.

15. A power boosting method, comprising:
sending, by a network-side device, first information to a terminal, wherein the first information is used to indicate a boosting operation on a target object, the first information is used to trigger the terminal to boost at least one of an upper limit value of the target object or a lower limit value of the target object, and the target object comprises at least one of a terminal configured maximum output power or a measured peak value of a terminal equivalent isotropically radiated power.

16. The method according to claim 15, wherein the first information comprises at least one of the following:
target indication information, wherein the target indication information is used to indicate relaxation of a terminal radio frequency indicator or a target radio frequency indicator to be relaxed in a terminal radio frequency indicator; or
a first maximum allowed power boost value, wherein the first maximum allowed power boost value is used to represent a maximum allowed power boost value when the terminal radio frequency indicator is relaxed.

17. The method according to claim 16, wherein before the sending, by a network-side device, first information to a terminal, the method further comprises:
determining, by the network-side device, the first maximum allowed power boost value from multiple candidate maximum allowed power boost values.

18. The method according to claim 15, wherein before the sending, by a network-side device, first information to a terminal, the method further comprises:
sending, by the network-side device, second information to the terminal, wherein the second information comprises at least one second maximum allowed power boost value, and each of the second maximum allowed power boost value is associated with at least one terminal radio frequency indicator.

19. The method according to any one of claims 15 to 18, wherein the method further comprises:
sending, by the network-side device, effective information to the terminal, wherein the effective information is associated with a first maximum allowed power boost value or a second maximum allowed power boost value, and the effective information comprises at least one of the following:
an activated waveform;
an activated modulation scheme; or
an activated resource block region.

20. The method according to any one of claims 15 to 19, wherein before the sending, by a network-side device, first information to a terminal, the method further comprises:
receiving, by the network-side device, capability information from the terminal, wherein the capability information is used to indicate whether the terminal supports boosting of the target object; wherein
the sending, by a network-side device, first information to a terminal comprises:
in a case that the terminal supports boosting of the target object, sending, by the network-side device, the first information to the terminal.

21. A power boosting apparatus, comprising:
a processing module configured to boost at least one of an upper limit value of a target object or a lower limit value of the target object in a case that a terminal receives first information from a network-side device, wherein the target object comprises at least one of a terminal configured maximum output power or a measured peak value of a terminal equivalent isotropically radiated power; wherein
the first information is used to indicate the terminal to perform a boosting operation on the target object.

22. The apparatus according to claim 21, wherein the first information comprises at least one of the following:
target indication information, wherein the target indication information is used to indicate relaxation of a terminal radio frequency indicator or a target radio frequency indicator to be relaxed in a terminal radio frequency indicator; or
a first maximum allowed power boost value, wherein the first maximum allowed power boost value is used to represent a maximum allowed power boost value when the terminal radio frequency indicator is relaxed.

23. The apparatus according to claim 22, wherein the processing module comprises:
a determining unit configured to, in a case that the terminal receives the first information from the network-side device, determine a target maximum allowed power boost value; and
a boosting unit configured to boost at least one of the upper limit value of the target object or the lower limit value of the target object based on the target maximum allowed power boost value; wherein
in a case that the first information comprises the first maximum allowed power boost value, the target maximum allowed power boost value is the first maximum allowed power boost value; and in a case that the first information comprises the target indication information, the target maximum allowed power boost value comprises any one of the following:
a protocol-agreed maximum allowed power boost value;
a second maximum allowed power boost value associated with the target radio frequency indicator among at least one second maximum allowed power boost value; and
a maximum allowed power boost value determined based on at least one of a waveform, a modulation scheme, or a resource block region.

24. The apparatus according to claim 22, wherein the processing module is configured to perform at least one of the following:
boosting a lower limit value of the terminal configured maximum output power based on a first maximum power reduction value; and
boosting a lower limit value of the measured peak value of the terminal equivalent isotropically radiated power based on a third maximum power reduction value; wherein
the first maximum power reduction value is less than a second maximum power reduction value, the third maximum power reduction value is less than the second maximum power reduction value, and the second maximum power reduction value represents an allowed maximum power reduction value when the terminal radio frequency indicator is not relaxed.

25. A power boosting apparatus, comprising:
a first sending module configured to send first information to a terminal, wherein the first information is used to indicate a boosting operation on a target object, the first information is used to trigger the terminal to boost at least one of an upper limit value of the target object or a lower limit value of the target object, and the target object comprises at least one of a terminal configured maximum output power or a measured peak value of a terminal equivalent isotropically radiated power.

26. The apparatus according to claim 25, wherein the first information comprises at least one of the following:
target indication information, wherein the target indication information is used to indicate relaxation of a terminal radio frequency indicator or a target radio frequency indicator to be relaxed in a terminal radio frequency indicator; or
a first maximum allowed power boost value, wherein the first maximum allowed power boost value is used to represent a maximum allowed power boost value when the terminal radio frequency indicator is relaxed.

27. The apparatus according to claim 26, further comprising:
a determining module configured to determine the first maximum allowed power boost value from multiple candidate maximum allowed power boost values.

28. The apparatus according to claim 25, wherein the first sending module is further configured to:
send second information to the terminal, wherein the second information comprises at least one second maximum allowed power boost value, and each of the second maximum allowed power boost value is associated with at least one terminal radio frequency indicator.

29. A terminal, comprising a processor and a memory, wherein the memory stores a program or instructions capable of running on the processor, and the program or instructions, when executed by the processor, implement the steps of the power boosting method according to any one of claims 1 to 14.

30. A network-side device, comprising a processor and a memory, wherein the memory stores a program or instructions capable of running on the processor, and the program or instructions, when executed by the processor, implement the steps of the power boosting method according to any one of claims 15 to 20.

31. A readable storage medium, wherein a program or instructions are stored on the readable storage medium, and the program or instructions, when executed by a processor, implement the steps of the power boosting method according to any one of claims 1 to 20.
